# EUROPÄISCHE PATENTSCHRIFT

(11) **EP 3 616 367 B1**
(45) Veröffentlichungstag und Bekanntmachung des Hinweises auf die Patenterteilung: **31.03.2021**
(21) Anmeldenummer: 17735094.9
(22) Anmeldetag: 30.06.2017
(51) Int. Cl.: H04L 12/40

(54) **VERFAHREN ZUM BETRIEB EINES MEHRERE KOMMUNIKATIONSGERÄTE UMFASSENDEN KOMMUNIKATIONSNETZES EINES INDUSTRIELLEN AUTOMATISIERUNGSSYSTEMS UND STEUERUNGSEINHEIT**
METHOD FOR OPERATING AN INDUSTRIAL AUTOMATION SYSTEM COMMUNICATION NETWORK COMPRISING A PLURALITY OF COMMUNICATION DEVICES, AND CONTROL UNIT
PROCÉDÉ PERMETTANT DE FAIRE FONCTIONNER UN RÉSEAU DE COMMUNICATION COMPRENANT PLUSIEURS APPAREILS DE COMMUNICATION POUR UN SYSTÈME D'AUTOMATISATION INDUSTRIEL, ET UNITÉ DE COMMANDE

(43) Veröffentlichungstag der Anmeldung: 04.03.2020
(73) Patentinhaber: Siemens Aktiengesellschaft, 80333 München (DE)
(72) Erfinder: GRUNER, Axel, 90204 Nürnberg (DE); RIEDL, Johannes, 84030 Ergolding (DE)
(86) Internationale Anmeldenummer: PCT/EP2017/066284
(87) Internationale Veröffentlichungsnummer: WO 2019/001729

(56) Entgegenhaltungen:
- EP-A1- 2 221 682
- EP-A1- 2 996 004
- EP-A1- 3 001 647
- EP-A1- 3 035 606

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Software Defined Networking (SDN) zielt auf eine Virtualisierung von Kommunikationsnetzfunktionen ab, indem Kommunikationsgeräte wie Router oder Switche funktionell in Control Plane und Data Plane zugeordnete Komponenten unterteilt werden. Die Data Plane umfasst Funktionen bzw. Komponenten zur Weiterleitung von Datenpaketen bzw. -rahmen. Die Control Plane umfasst hingegen Management-Funktionen zur Steuerung der Weiterleitung bzw. der Komponenten der Data Plane. Mit OpenFlow ist beispielsweise ein Standard für Software-implementierte Control Planes definiert. Eine Abstraktion von Hardware als virtuelle Services ermöglicht einen Verzicht auf eine manuelle Konfiguration der Hardware, insbesondere indem eine programmierbare, zentrale Steuerung von Netzverkehr geschaffen wird. OpenFlow unterstützt eine Partitionierung von System-Ressourcen in Network Slices, durch die unabhängig von anderen bestehenden Network Slices eine Bereitstellung definierter System-Ressourcen gewährleistet wird.

Aus US 2013/268686 A1 ist ein Verfahren zum Senden einer Anforderung eines Verbindungsaufbaus bekannt, bei dem ein OpenFlow-Switch eine Nachricht mit einer Parameteranforderung an einen Konfigurationsserver sendet, um Verbindungsparameter von einem OpenFlow-Controller zu erhalten. Auf die Nachricht mit der Parameteranforderung empfängt der OpenFlow-Switch eine IP-Adresse und einen Satz von OpenFlow-Verbindungsparametern vom Konfigurationsserver, wobei der Satz von OpenFlow-Verbindungsparametern zumindest Verbindungsparameter eines ersten OpenFlow-Controllers umfasst. Der OpenFlow-Switch sendet entsprechend der IP-Adresse und dem Satz von OpenFlow-Verbindungsparametern des ersten OpenFlow-Controllers eine Nachricht mit einer Anforderung eines Verbindungsaufbaus an den ersten OpenFlow-Controller. Auf diese Weise kann ein automatischer Verbindungsaufbau zwischen einem OpenFlow-Switch und einem OpenFlow-Controller realisiert werden.

DE 10 138 363 A1 offenbart ein Verfahren zur Gewährleistung der Dienstgüte von Internet-Anwendungen, bei dem Internet-Anwendungen unter Ausnutzung der zum Startzeitpunkt der Internet-Anwendung vorhandenen Ressourcen des IP-Zugangsnetzes und des Endsystems automatisch angepasst und optimiert werden. Von Internet-Anwendungen werden die QoS-Kommunikationsanforderungen (Quality of Service) an das IP-Zugangsnetz erfasst und als Anwendungsprofile gespeichert. Bei Aktivierung einer Internet-Anwendung werden die aktuell vorhandenen Netzressourcen des IP-Zugangsnetzes mit den gespeicherten Anwendungsprofilen verglichen, und es werden Steuerdaten ermittelt. Anhand der ermittelten Steuerdaten wird die Bereitstellung der Netzressourcen für die betreffende Internet-Anwendung optimiert. Die Optimierung bezieht sich dabei auf einen angepassten zeitlichen Ablauf und die Ermittlung der unter Kostenaspekten (Übertragungskosten) günstigsten Konstellation.

In EP 2 795 842 B1 ist eine Steuerungseinheit zur Bereitstellung von Kommunikationsdiensten innerhalb eines physikalischen Kommunikationsnetzes beschrieben. Diese Kommunikationsdienste werden durch mehrere auf Kommunikationsgeräten ablaufende Anwendungen genutzt, für die jeweils Anforderungen an die Kommunikationsdienste spezifiziert sind. Durch die Steuerungseinheit wird ein Kommunikationsnetzmodell erzeugt, das eine Topologie des physikalischen Kommunikationsnetzes wiedergibt und für jedes Kommunikationsgerät ein Netzknotenmodell umfasst. Das Netzknotenmodell beschreibt Funktionen und Ressourcen des jeweiligen Kommunikationsgeräts. Außerdem berechnet die Steuerungseinheit für jede auf den Kommunikationsgeräten ablaufende Anwendung ein virtuelles Kommunikationsnetz, indem die Anforderungen der jeweiligen Anwendung an die Kommunikationsdienste auf das Kommunikationsnetzmodell abgebildet werden. Die berechneten virtuellen Kommunikationsnetze umfassen jeweils zumindest 2 durch ein Netzknotenmodell beschriebene Netzknoten und eine Partition bzw. Network Slice ausgewählter Kommunikationsnetzressourcen, die durch die Kommunikationsgeräte bereitgestellt werden.

EP 3 035 606 A1 betrifft ein Verfahren zur Datenübermittlung in einem zumindest 2 virtuelle lokale Netze umfassenden Kommunikationsnetz, bei dem Datenströmen jeweils eine Datenstrom-individuelle Ziel-Gerätekennung zugeordnet wird. Bei einer Übermittlung eines Datenstroms von einem Quell-Kommunikationsgerät, das einem ersten virtuellen lokalen Netz zugeordnet ist, an ein Ziel-Kommunikationsgerät, das einem zweiten lokalen Netz zugeordnet ist, wird ein dem Datenstrom innerhalb des ersten virtuellen lokalen Netzes zugeordneter Identifikator in einen dem Datenstrom innerhalb des zweiten virtuellen lokalen Netzes zugeordneten Identifikator umgewandelt.

Der vorliegenden Erfindung liegt die Aufgabe zugrunde, ein Verfahren zum effizienten und zuverlässigen Betrieb eines zahlreiche Kommunikationsgeräte umfassenden Kommunikationsnetzes für ein industrielles Automatisierungssystem anzugeben, das eine bedarfsgerechte Gewährleistung von Dienstgüteparametern, wie Bandbreite, Latenz oder Verfügbarkeit, für eine Vielzahl unterschiedlicher Benutzer ermöglicht, sowie eine Steuerungseinheit zur Durchführung des Verfahrens zu schaffen.

Diese Aufgabe wird erfindungsgemäß durch ein Verfahren mit den in Anspruch 1 genannten Merkmalen und durch eine Steuerungseinheit mit den in Anspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum Betrieb eines mehrere Kommunikationsgeräte umfassenden Kommunikationsnetzes eines industriellen Automatisierungssystems steuert zumindest eine Steuerungseinheit Funktionen mehrerer Kommunikationsgeräte steuert, die der Steuerungseinheit zugeordnet sind. Das Kommunikationsnetz wird in mehrere Partitionen unterteilt wird, die jeweils mehrere Endknoten als Dienstzugangspunkte und vorgebbare Anteile an Systemressourcen von Kommunikationsgeräten umfassen, die der jeweiligen Partition zugeordnet sind. Für eine Datenübermittlung innerhalb der Partitionen werden jeweils Endknotenpaarweise und richtungsabhängig garantierbare Dienstgüteparameter ermittelt, die in einer mehrdimensionalen Dienstgüteparameter-Matrix je Partition abbildbar sind. Dienstgüteparameter können beispielsweise Bandbreite, Latenz, Verfügbarkeit bzw. Redundanz umfassen.

Erfindungsgemäß wird jede Partition zusammen mit den garantierbaren Dienstgüteparametern jeweils eindeutig zu einem Benutzer zugeordnet. Dabei werden potentiell verfügbare System-ressourcen bzw. Berechtigungen für die Benutzer durch die jeweils zugeordnete Partition festgelegt. Die Steuerungseinheit ermittelt für Benutzer-seitige Kommunikationsdienst-Anforderungen innerhalb einer Partition jeweils einen Pfad zwischen einem ersten Kommunikationsgerät an einem ersten Endknoten und einem zweiten Kommunikationsgerät an einem zweiten Endknoten über dritte Kommunikationsgeräte innerhalb der dem jeweiligen Benutzer zugeordneten Partition. Vorzugsweise werden im Rahmen von Benutzer-seitigen Kommunikationsdienst-Anforderungen Dienstgüteparameter zusätzlich zu Endknotenpaaren spezifiziert. Angeforderte Kommunikationsdienste werden vorteilhafterweise jeweils einer Partition fest zugeordnet.

Die Steuerungseinheit überprüft erfindungsgemäß, ob entlang der ermittelten Pfade innerhalb der dem jeweiligen Benutzer zugeordneten Partition während einer geplanten Nutzungsdauer jeweils erforderliche Systemressourcen verfügbar sind. Vorzugsweise werden hierzu die Benutzer-seitigen Kommunikationsdienst-Anforderungen zur Überprüfung gegen die ermittelten garantierbaren Dienstgüteparameter abgeglichen, die in der Dienstgüteparameter-Matrix der jeweiligen Partition abgebildet. Bei einem positiven Überprüfungsergebnis reserviert die Steuerungseinheit für die Kommunikationsdienst-Anforderungen jeweils erforderliche Systemressourcen und steuert Routing- oder Switching-Funktionen der dritten Kommunikationsgeräte entsprechend den ermittelten Pfaden. Vorteilhafterweise können neue oder geänderte Kommunikationsdienst-Anforderungen leicht bei laufendem Betrieb des Kommunikationsnetzes berücksichtigt werden. Darüber hinaus ist vorteilhaft, dass Spezifizierungen von Kommunikationsdienst-Anforderungen unabhängig von deren Umsetzung nach erfolgreicher Überprüfung gegen die garantierbaren Dienstgüteparameter sind.

Entsprechend einer vorteilhaften Weiterbildung der vorliegenden Erfindung überprüft die Steuerungseinheit bei Kommunikationsdienst-Anforderungen jeweils anhand von Systemrichtlinien, ob Systemressourcen für den jeweiligen Benutzer innerhalb der ihm zugeordneten Partition begrenzt sind bzw. ob der Benutzer zur Nutzung von Datenströmen mit Echtzeit-Anforderungen berechtigt ist. Bei einem negativen Überprüfungsergebnis wird eine Warnung signalisiert.

Vorzugsweise umfassen die dritten Kommunikationsgeräte jeweils zumindest eine Sende- und Empfangseinheit, wobei jeder Sende- und Empfangseinheit jeweils mehrere Sendewarteschlangen zugeordnet sind, denen jeweils für eine definierbare Zugriffszeitdauer innerhalb eines definierbaren Wiederholungszyklus Zugriff auf die jeweilige Sende- und Empfangseinheit eingeräumt wird. Außerdem ermittelt die Steuerungseinheit für jeden Benutzer-seitig angeforderten Datenstrom mit Echtzeit-Anforderungen, ob diesem in zumindest einem dritten Kommunikationsgerät entlang des ermittelten Pfades ein Sendefenster in einer Sendewarteschlange exklusiv zugeordnet werden kann. Bei einem negativen Ermittlungsergebnis signalisiert die Steuerungseinheit zumindest eine Warnung. Dagegen reserviert die Steuerungseinheit bei einem positiven Ermittlungsergebnis entsprechend ermittelten Pfaden und Zuordnungen der Sendewarteschlangen erforderliche Systemressourcen für Datenströme mit Echtzeit-Anforderungen. Vorteilhafterweise werden die Zugriffszeitdauern und Wiederholungszyklen für die Sendewarteschlangen der dritten Kommunikationsgeräte mittels Time Aware Shaper entsprechend IEE 802.1Qbv gesteuert.

Entsprechend einer bevorzugten Ausgestaltung des erfindungsgemäßen Verfahrens sind die Kommunikationsgeräte einem Software Defined Network zugeordnet, das eine als Control Plane bezeichnete Kommunikationssteuerungsebene und eine als Data Plane bezeichnete Datenübermittlungsebene umfasst. Während die Steuerungseinheit der Control Plane zugeordnet ist, sind die Kommunikationsgeräte der Data Plane zugeordnet. Die Partitionen sind insbesondere Network Slices und können mittels eines Engineering-Systems manuell durch einen Systemadministrator oder automatisiert festgelegt werden. Darüber hinaus umfassen die dritten Kommunikationsgeräte vorzugsweise Router bzw. Switches, und durch die Steuerungseinheit können Flow-Tabellen vorgegeben werden, aus denen Routing-Tabellen bzw. Forwarding-Tabellen für der Steuerungseinheit zugeordnete dritte Kommunikationsgeräte abgeleitet werden.

Die erfindungsgemäße Steuerungseinheit ist zur Durchführung eines Verfahrens entsprechend vorangehenden Ausführungen vorgesehen und dafür ausgestaltet sowie eingerichtet, Funktionen mehrerer Kommunikationsgeräte eines Kommunikationsnetzes zu steuern, die der Steuerungseinheit zugeordnet sind. Dabei ist das Kommunikationsnetz in mehrere Partitionen unterteilt, die jeweils mehrere Endknoten als Dienstzugangspunkte und vorgebbare Anteile an Systemressourcen von Kommunikationsgeräten umfassen, die der jeweiligen Partition zugeordnet sind. Außerdem ist die Steuerungseinheit dafür ausgestaltet und eingerichtet, für eine Datenübermittlung innerhalb einer Partition jeweils Endknotenpaar-weise und richtungsabhängig ermittelte garantierbare Dienstgüteparameter entgegenzunehmen, die in einer mehrdimensionalen Dienstgüteparameter-Matrix je Partition abbildbar sind. Darüber hinaus ist die Steuerungseinheit dafür ausgestaltet und eingerichtet, jede Partition zusammen mit den garantierbaren Dienstgüteparametern jeweils eindeutig zu einem Benutzer zuzuordnen. Dabei sind potentiell verfügbare Systemressourcen bzw. Berechtigungen für die Benutzer durch die jeweils zugeordnete Partition festgelegt.

Erfindungsgemäß ist die Steuerungseinheit zusätzlich dafür ausgestaltet und eingerichtet, für Benutzer-seitige Kommunikationsdienst-Anforderungen innerhalb einer Partition jeweils einen Pfad zwischen einem ersten Kommunikationsgerät an einem ersten Endknoten und einem zweiten Kommunikationsgerät an einem zweiten Endknoten über dritte Kommunikationsgeräte innerhalb der dem jeweiligen Benutzer zugeordneten Partition zu ermitteln. Des weiteren ist die Steuerungseinheit dafür ausgestaltet und einrichtet, zu überprüfen, ob entlang der ermittelten Pfade innerhalb der dem jeweiligen Benutzer zugeordneten Partition während einer geplanten Nutzungsdauer jeweils erforderliche Systemressourcen verfügbar sind. Darüber hinaus ist die Steuerungseinheit dafür ausgestaltet und eingerichtet, für die Kommunikationsdienst-Anforderungen jeweils bei einem positiven Überprüfungsergebnis erforderliche Systemressourcen zu reservieren und Routing- oder Switching-Funktionen der dritten Kommunikationsgeräte entsprechend den ermittelten Pfaden zu steuern.

Die vorliegende Erfindung wird nachfolgend an einem Ausführungsbeispiel anhand der Zeichnung näher erläutert. Es zeigt
- Figur 1: ein mehrere Kommunikationsgeräte und diesen zugeordnete Steuerungseinheiten umfassendes Kommunikationsnetz eines industriellen Automatisierungssystems,
- Figur 2: eine Darstellung eines Ablaufs für eine Bearbeitung von Kommunikationsdienst-Anforderungen innerhalb des in Figur 1 dargestellten Kommunikationsnetzes.

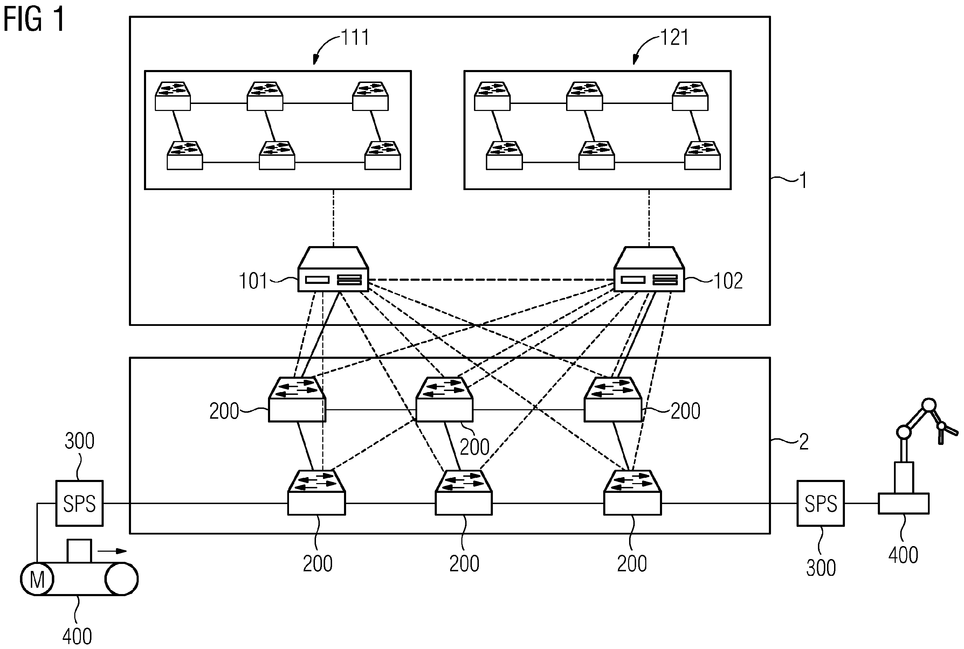

Das in Figur 1 dargestellte Kommunikationsnetz eines industriellen Automatisierungssystems umfasst mehrere Kommunikationsgeräte 200 und mehrere Steuerungseinheiten 101, 102. Die Kommunikationsgeräte 200 können beispielsweise Switche, Router oder Firewalls sein und zum Anschluss von speicherprogrammierbaren Steuerungen 300 oder Ein-/Ausgabeeinheiten des industriellen Automatisierungssystems dienen. Speicherprogrammierbare Steuerungen 300 umfassen typischerweise jeweils ein Kommunikationsmodul, eine Zentraleinheit sowie zumindest eine Eingabe/Ausgabe-Einheit (I/O-Modul) und stellen somit ebenfalls Kommunikationsgeräte dar. Eingabe/Ausgabe-Einheiten können grundsätzlich auch als dezentrale Peripheriemodule ausgestaltet sein, die entfernt von einer speicherprogrammierbaren Steuerung angeordnet sind.

Über das Kommunikationsmodul ist eine speicherprogrammierbare Steuerung 300 beispielsweise mit einem Switch oder Router oder zusätzlich mit einem Feldbus verbunden. Die Eingabe/Ausgabe-Einheit dient einem Austausch von Steuerungs- und Messgrößen zwischen der speicherprogrammierbaren Steuerung 300 und einer durch die speicherprogrammierbare Steuerung 300 gesteuerten Maschine oder Vorrichtung 400. Die Zentraleinheit ist insbesondere für eine Ermittlung geeigneter Steuerungsgrößen aus erfassten Messgrößen vorgesehen. Obige Komponenten der speicherprogrammierbaren Steuerung 300 sind im vorliegenden Ausführungsbeispiel über ein Rückwandbus-System miteinander verbunden.

Die Kommunikationsgeräte 200 sind im vorliegenden Ausführungsbeispiel einem Software Defined Network (SDN) zugeordnet, das eine als Control Plane bezeichnete Kommunikationssteuerungsebene 1 und eine als Data Plane bezeichnete Datenübermittlungsebene 2 umfasst. Die Steuerungseinheiten 101, 102 als SDN-Controller sind der Control Plane zugeordnet, während die Kommunikationsgeräte der Data Plane zugeordnet sind. Durch die Steuerungseinheiten 101, 102 werden beispielsweise Flow-Tabellen für Switche oder Router vorgegeben, aus denen Routing-Regeln bzw. Forwarding-Regeln für der jeweiligen Steuerungseinheit 101, 102 zugeordnete Kommunikationsgeräte 200 abgeleitet werden.

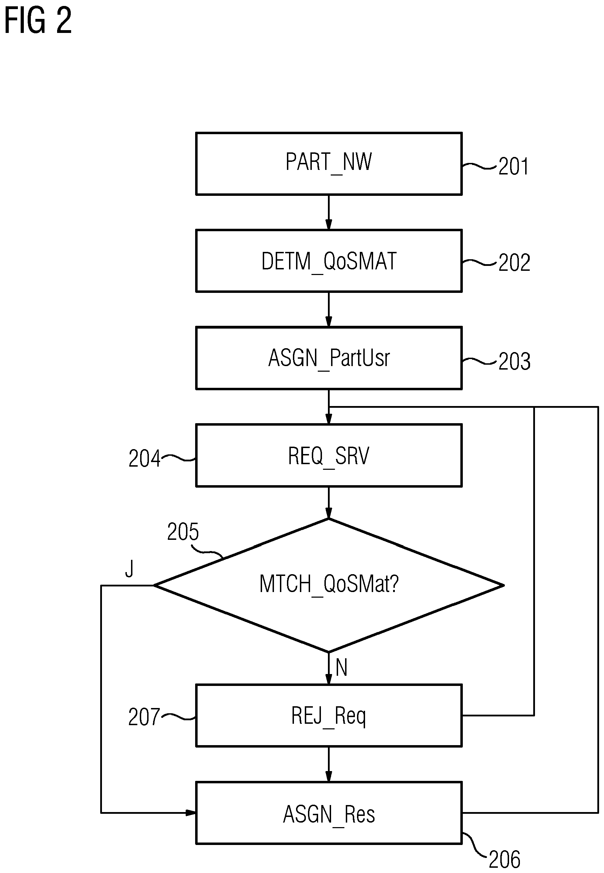

Die Steuerungseinheiten 101, 102 sind allgemein dafür ausgestaltet und eingerichtet, Funktionen mehrerer Kommunikationsgeräte 200 zu steuern, die der jeweiligen Steuerungseinheit zugeordnet sind. Entsprechend Schritt 201 des in Figur 2 dargestellten Ablaufs wird das Kommunikationsnetz in mehrere Partitionen unterteilt, die jeweils mehrere Endknoten als Dienstzugangspunkte und vorgebbare Anteile an Systemressourcen von Kommunikationsgeräten 200 umfassen, die der jeweiligen Partition zugeordnet sind. Im vorliegenden Ausführungsbeispiel sind die Partitionen Network Slices, die mittels eines Engineering-Systems manuell durch einen Systemadministrator oder automatisiert festgelegt werden. Für jede Steuerungseinheit 101, 102 ist jeweils eine separate Ressourcensicht 111, 121 mit den Anteilen an Systemressourcen vorgesehen.

Für eine Datenübermittlung innerhalb der Partitionen werden jeweils Endknotenpaar-weise und richtungsabhängig garantierbare Dienstgüteparameter ermittelt, die in einer mehrdimensionalen Dienstgüteparameter-Matrix je Partition abgebildet werden (Schritt 202). Dienstgüteparameter können beispielsweise Bandbreite, Latenz, Verfügbarkeit bzw. Redundanz umfassen. Entsprechend Schritt 203 wird jede Partition zusammen mit den garantierbaren Dienstgüteparametern jeweils eindeutig zu einem Benutzer zugeordnet. Durch die jeweils zugeordnete Partition werden potentiell verfügbare Systemressourcen bzw. Berechtigungen für die Benutzer festgelegt.

Im Rahmen von Benutzer-seitigen Kommunikationsdienst-Anforderungen entsprechend Schritt 204 werden Dienstgüteparameter zusätzlich zu Endknotenpaaren spezifiziert. Angeforderte Kommunikationsdienste werden dabei jeweils einer Partition fest zugeordnet. Die Steuerungseinheiten 101, 102 ermitteln für Benutzer-seitige Kommunikationsdienst-Anforderungen innerhalb einer Partition jeweils einen Pfad zwischen einem ersten Kommunikationsgerät an einem ersten Endknoten und einem zweiten Kommunikationsgerät an einem zweiten Endknoten über dritte Kommunikationsgeräte innerhalb der dem jeweiligen Benutzer zugeordneten Partition. Auf dieser Basis werden die Benutzer-seitigen Kommunikationsdienst-Anforderungen zur Überprüfung gegen die Dienstgüteparameter-Matrix der jeweiligen Partition abgeglichen. Somit können die Steuerungseinheiten 101, 102 entsprechend Schritt 205 überprüfen, ob entlang der ermittelten Pfade innerhalb der dem jeweiligen Benutzer zugeordneten Partition während einer geplanten Nutzungsdauer jeweils erforderliche Systemressourcen verfügbar sind. Insbesondere überprüfen die Steuerungseinheiten 101, 102 bei Kommunikationsdienst-Anforderungen jeweils anhand von Systemrichtlinien (System Policies), ob Systemressourcen für den jeweiligen Benutzer innerhalb der ihm zugeordneten Partition begrenzt sind bzw. ob der Benutzer zur Nutzung von Datenströmen mit Echtzeit-Anforderungen berechtigt ist.

Bei einem positiven Überprüfungsergebnis reservieren die Steuerungseinheiten 101, 102 entsprechend Schritt 206 für die Kommunikationsdienst-Anforderungen jeweils erforderliche Systemressourcen und steuern Routing- oder Switching-Funktionen der dritten Kommunikationsgeräte entsprechend den ermittelten Pfaden. Dagegen wird bei einem negativen Überprüfungsergebnis eine Warnung signalisiert (Schritt 207). Anschließend erfolgt in beiden Fällen eine Entgegennahme neuer Benutzer-seitiger Kommunikationsdienst-Anforderungen (Schritt 204).

Die dritten Kommunikationsgeräte umfassen jeweils zumindest eine Sende- und Empfangseinheit. Jeder Sende- und Empfangseinheit sind vorzugsweise jeweils mehrere Sendewarteschlangen zugeordnet, denen jeweils für eine definierbare Zugriffszeitdauer innerhalb eines definierbaren Wiederholungszyklus Zugriff auf die jeweilige Sende- und Empfangseinheit eingeräumt wird. Im Rahmen obiger Schritte ermitteln die Steuerungseinheiten 101, 102 für jeden Benutzer-seitig angeforderten Datenstrom mit Echtzeit-Anforderungen, ob diesem in zumindest einem dritten Kommunikationsgerät entlang des ermittelten Pfades ein Sendefenster in einer Sendewarteschlange exklusiv zugeordnet werden kann. Während die Steuerungseinheiten 101, 102 bei einem negativen Ermittlungsergebnis zumindest eine Warnung signalisieren, reservieren sie bei einem positiven Ermittlungsergebnis entsprechend ermittelten Pfaden und Zuordnungen der Sendewarteschlangen erforderliche Systemressourcen für Datenströme mit Echtzeit-Anforderungen. Vorzugsweise werden die Zugriffszeitdauern und Wiederholungszyklen für die Sendewarteschlangen der dritten Kommunikationsgeräte (200) mittels Time Aware Shaper entsprechend IEE 802.1Qbv gesteuert.

## Patentansprüche

1. Verfahren zum Betrieb eines mehrere Kommunikationsgeräte umfassenden Kommunikationsnetzes eines industriellen Automatisierungssystems, bei dem
- zumindest eine Steuerungseinheit (101, 102) Funktionen mehrerer Kommunikationsgeräte (200) steuert, die der Steuerungseinheit zugeordnet sind,
- das Kommunikationsnetz in mehrere Partitionen unterteilt wird, die jeweils mehrere Endknoten als Dienstzugangspunkte und vorgebbare Anteile an Systemressourcen von Kommunikationsgeräten (200) umfassen, die der jeweiligen Partition zugeordnet sind,
- für eine Datenübermittlung innerhalb der Partitionen jeweils Endknotenpaar-weise und richtungsabhängig garantierbare Dienstgüteparameter ermittelt werden, die in einer mehrdimensionalen Dienstgüteparameter-Matrix je Partition abbildbar sind,
- jede Partition zusammen mit den garantierbaren Dienstgüteparametern jeweils eindeutig zu einem Benutzer zugeordnet wird, wobei potentiell verfügbare Systemressourcen und/oder Berechtigungen für die Benutzer durch die jeweils zugeordnete Partition festgelegt werden,
- die Steuerungseinheit (101, 102) für Benutzer-seitige Kommunikationsdienst-Anforderungen innerhalb einer Partition jeweils einen Pfad zwischen einem ersten Kommunikationsgerät an einem ersten Endknoten und einem zweiten Kommunikationsgerät an einem zweiten Endknoten über dritte Kommunikationsgeräte innerhalb der dem jeweiligen Benutzer zugeordneten Partition ermittelt,
- die Steuerungseinheit (101, 102) überprüft, ob entlang der ermittelten Pfade innerhalb der dem jeweiligen Benutzer zugeordneten Partition während einer geplanten Nutzungsdauer jeweils erforderliche Systemressourcen verfügbar sind,
- die Steuerungseinheit (101, 102) für die Kommunikationsdienst-Anforderungen jeweils bei einem positiven Überprüfungsergebnis erforderliche Systemressourcen reserviert und Routing- oder Switching-Funktionen der dritten Kommunikationsgeräte entsprechend den ermittelten Pfaden steuert.

2. Verfahren nach Anspruch 1,
bei dem die Steuerungseinheit bei Kommunikationsdienst-Anforderungen jeweils anhand von Systemrichtlinien überprüft, ob Systemressourcen für den jeweiligen Benutzer innerhalb der ihm zugeordneten Partition begrenzt sind und/oder ob der Benutzer zur Nutzung von Datenströmen mit Echtzeit-Anforderungen berechtigt ist, und bei einem negativen Überprüfungsergebnis eine Warnung signalisiert.

3. Verfahren nach einem der Ansprüche 1 oder 2,
bei dem
- die dritten Kommunikationsgeräte jeweils zumindest eine Sende- und Empfangseinheit umfassen und jeder Sende- und Empfangseinheit jeweils mehrere Sendewarteschlangen zugeordnet sind, denen jeweils für eine definierbare Zugriffszeitdauer innerhalb eines definierbaren Wiederholungszyklus Zugriff auf die jeweilige Sende- und Empfangseinheit eingeräumt wird,
- die Steuerungseinheit (101, 102) für jeden Benutzer-seitig angeforderten Datenstrom mit Echtzeit-Anforderungen ermittelt, ob diesem in zumindest einem dritten Kommunikationsgerät entlang des ermittelten Pfades ein Sendefenster in einer Sendewarteschlange exklusiv zugeordnet werden kann,
- die Steuerungseinheit (101, 102) bei einem negativen Ermittlungsergebnis zumindest eine Warnung signalisiert,
- die Steuerungseinheit (101, 102) bei einem positiven Ermittlungsergebnis entsprechend ermittelten Pfaden und Zuordnungen der Sendewarteschlangen erforderliche Systemressourcen für Datenströme mit Echtzeit-Anforderungen reserviert.

4. Verfahren nach Anspruch 3,
bei dem die Zugriffszeitdauern und Wiederholungszyklen für die Sendewarteschlangen der dritten Kommunikationsgeräte mittels Time Aware Shaper entsprechend IEE 802.1Qbv gesteuert werden.

5. Verfahren nach einem der Ansprüche 1 bis 4,
bei dem die Kommunikationsgeräte einem Software Defined Network zugeordnet sind, das eine als Control Plane bezeichnete Kommunikationssteuerungsebene (1) und eine als Data Plane bezeichnete Datenübermittlungsebene (2) umfasst, bei dem die Steuerungseinheit (101, 102) der Control Plane zugeordnet ist und bei dem die Kommunikationsgeräte (200) der Data Plane zugeordnet sind.

6. Verfahren nach Anspruch 5,
bei dem die Partitionen mittels eines Engineering-Systems manuell durch einen Systemadministrator oder automatisiert festgelegt werden.

7. Verfahren nach einem der Ansprüche 5 oder 6,
bei dem die dritten Kommunikationsgeräte Router und/oder Switches umfassen und bei dem durch die Steuerungseinheit (101, 102) Flow-Tabellen vorgebbar sind, aus denen Routing-Tabellen und/oder Forwarding-Tabellen für der Steuerungseinheit (101, 102) zugeordnete dritte Kommunikationsgeräte abgeleitet werden.

8. Verfahren nach einem der Ansprüche 1 bis 7,
bei dem angeforderte Kommunikationsdienste jeweils einer Partition fest zugeordnet werden.

9. Verfahren nach einem der Ansprüche 1 bis 8,
bei dem Dienstgüteparameter Bandbreite, Latenz, Verfügbarkeit und/oder Redundanz umfassen.

10. Verfahren nach einem der Ansprüche 1 bis 9,
bei dem Dienstgüteparameter im Rahmen von Benutzer-seitigen Kommunikationsdienst-Anforderungen zusätzlich zu Endknotenpaaren spezifiziert werden.

11. Verfahren nach Anspruch 10,
bei dem die Benutzer-seitigen Kommunikationsdienst-Anforderungen zur Überprüfung gegen die ermittelten garantierbaren Dienstgüteparameter, die in der Dienstgüteparameter-Matrix der jeweiligen Partition abgebildet werden, abgeglichen werden.

12. Steuerungseinheit zur Durchführung eines Verfahrens nach einem der Ansprüche 1 bis 11, die dafür ausgestaltet und eingerichtet ist,
- Funktionen mehrerer Kommunikationsgeräte (200) eines Kommunikationsnetzes zu steuern, die der Steuerungseinheit zugeordnet sind, wobei das Kommunikationsnetz in mehrere Partitionen unterteilt ist, die jeweils mehrere Endknoten als Dienstzugangspunkte und vorgebbare Anteile an Systemressourcen von Kommunikationsgeräten (200) umfassen, die der jeweiligen Partition zugeordnet sind,
- für eine Datenübermittlung innerhalb einer Partition jeweils Endknotenpaar-weise und richtungsabhängig ermittelte garantierbare Dienstgüteparameter entgegenzunehmen, die in einer mehrdimensionalen Dienstgüteparameter-Matrix je Partition abbildbar sind,
- jede Partition zusammen mit den garantierbaren Dienstgüteparametern jeweils eindeutig zu einem Benutzer zuzuordnen, wobei potentiell verfügbare Systemressourcen und/oder Berechtigungen für die Benutzer durch die jeweils zugeordnete Partition festgelegt sind,
- für Benutzer-seitige Kommunikationsdienst-Anforderungen innerhalb einer Partition jeweils einen Pfad zwischen einem ersten Kommunikationsgerät an einem ersten Endknoten und einem zweiten Kommunikationsgerät an einem zweiten Endknoten über dritte Kommunikationsgeräte innerhalb der dem jeweiligen Benutzer zugeordneten Partition zu ermitteln,
- zu überprüfen, ob entlang der ermittelten Pfade innerhalb der dem jeweiligen Benutzer zugeordneten Partition während einer geplanten Nutzungsdauer jeweils erforderliche Systemressourcen verfügbar sind,
- für die Kommunikationsdienst-Anforderungen jeweils bei einem positiven Überprüfungsergebnis erforderliche Systemressourcen zu reservieren und Routing- oder Switching-Funktionen der dritten Kommunikationsgeräte (200) entsprechend den ermittelten Pfaden zu steuern.

## Claims

1. Method for operating an industrial automation system communication network comprising a plurality of communication devices, in which
- at least one control unit (101, 102) controls functions of a plurality of communication devices (200) which are assigned to the control unit,
- the communication network is divided into a plurality of partitions, which each comprise a plurality of end nodes as service access points and predeterminable shares of system resources of communication devices (200), which are assigned to the respective partition,
- guaranteeable service quality parameters are determined for a data transmission within the partitions, in each case by pairs of end nodes and in a direction-dependent manner, which may be mapped in a multi-dimensional service quality parameter matrix for each partition,
- each partition together with the guaranteeable service quality parameters is uniquely assigned in each case to a user, wherein potentially available system resources and/or permissions for the users are defined by the assigned partition in each case,
- for user-side communication service requests within a partition the control unit (101, 102) determines in each case a path between a first communication device at a first end node and a second communication device at a second end node via third communication devices within the partition assigned to the respective user,
- the control unit (101, 102) verifies whether in each case necessary system resources are available along the determined paths within the partition assigned to the respective user during a planned usage period,
- the control unit (101, 102) reserves system resources necessary for the communication service requests in each case in the event of a positive verification result and controls routing or switching functions of the third communication devices in accordance with the determined paths.

2. Method according to Claim 1,
in which, in the event of communication service requests, the control unit verifies, in each case on the basis of system policies, whether system resources for the respective user are limited within the partition assigned to said user and/or whether the user is authorized to use data streams with real-time requirements, and signals a warning in the case of a negative verification result.

3. Method according to either of Claims 1 or 2,
in which
- the third communication devices each comprise at least one transceiver unit and each transceiver unit is assigned in each case a plurality of transmit queues, to each of which access is granted to the respective transceiver unit for a definable access duration within a definable repetition cycle,
- for each user-requested data stream with real-time requirements, the control unit (101, 102) determines whether, in at least one third communication device along the determined path, a transmission window in a transmit queue can be assigned exclusively to said data stream,
- in the case of a negative determination result the control unit (101, 102) signals at least one warning,
- in the case of a positive determination result the control unit (101, 102) reserves necessary system resources for data streams with real-time requirements in accordance with determined paths and assignments of the transmit queues.

4. Method according to Claim 3,
in which the access periods and repetition cycles for the transmit queues of the third communication devices are controlled by means of Time Aware Shapers in accordance with IEE 802.1Qbv.

5. Method according to any one of Claims 1 to 4,
in which the communication devices are assigned to a Software Defined Network, which comprises a communication control level (1) designated as the Control Plane and a data transfer level (2) designated as the Data Plane, in which the control unit (101, 102) is assigned to the Control Plane and in which the communication devices (200) are assigned to the Data Plane.

6. Method according to Claim 5,
in which the partitions are defined using an engineering system, either manually by a system administrator or automatically.

7. Method according to either of Claims 5 or 6,
in which the third communication devices comprise routers and/or switches and in which flow tables can be specified by the control unit (101, 102), from which routing tables and/or forwarding tables are derived for third communication devices assigned to the control unit (101, 102).

8. Method according to any one of Claims 1 to 7,
in which requested communication services are permanently assigned to a partition in each case.

9. Method according to any one of Claims 1 to 8,
in which service quality parameters comprise bandwidth, latency, availability and/or redundancy.

10. Method according to any one of Claims 1 to 9,
in which service quality parameters are specified additionally for end node pairs in the context of user-side communication service requests.

11. Method according to Claim 10,
in which for verification purposes the user-side communication service requests are compared against the determined guaranteeable service quality parameters, which are mapped in the service quality parameter matrix of the respective partition.

12. Control unit for carrying out a method according to any one of Claims 1 to 11, which is designed and configured for
- controlling functions of a plurality of communication devices (200) of a communication network which are assigned to the control unit, wherein the communication network is divided into a plurality of partitions, which each comprise a plurality of end nodes as service access points and predeterminable shares of system resources of communication devices (200), which are assigned to the respective partition,
- in each case to accept guaranteeable service quality parameters determined for a data transmission within a partition, in each case by pairs of end nodes and in a direction-dependent manner, which may be mapped in a multi-dimensional service quality parameter matrix for each partition,
- to assign each partition together with the guaranteeable service quality parameters in each case uniquely to a user, wherein potentially available system resources and/or permissions for the users are defined by the assigned partition in each case,
- for user-side communication service requests within a partition, to determine in each case a path between a first communication device at a first end node and a second communication device at a second end node via third communication devices within the partition assigned to the respective user,
- to verify whether in each case necessary system resources are available along the determined paths within the partition assigned to the respective user during a planned usage period,
- to reserve system resources necessary for the communication service requests in each case in the event of a positive verification result, and to control routing or switching functions of the third communication devices (200) in accordance with the determined paths.

## Revendications

1. Procédé pour faire fonctionner un réseau de communication, comprenant plusieurs appareils de communication, d'un système d'automatisation industriel, dans lequel
- au moins une unité (101, 102) de commande des fonctions de plusieurs appareils (200) de communication, qui sont associés à l'unité de commande,
- le réseau de communication est subdivisé en plusieurs partitions, qui comprennent chacune plusieurs nœuds finaux comme points d'accès au service et des proportions pouvant être données à l'avance de ressources de système des appareils (20) de communication, qui sont associés à la partition respective,
- pour une transmission de données dans les partitions, on détermine respectivement des paramètres de qualité de service pouvant être garanties par paire de nœuds finaux et en fonction de la direction et qui peuvent être représentés pour chaque partition dans une matrice de paramètre de qualité de service pluridimensionnelle,
- chaque partition est, ensemble avec les paramètres de qualité de service pouvant être garantis, associée respectivement d'une manière univoque à un utilisateur des ressources de système disponibles potentiellement et/ou des autorisations pour l'utilisateur étant fixées par la partition associée respectivement,
- l'unité (101, 102) de commande détermine pour des demandes de service de communication de la part de l'utilisateur au sein d'une partition respectivement un chemin entre un premier appareil de communication à un premier nœud final et un deuxième appareil de communication à un deuxième nœud final en passant par des troisièmes appareils de communication au sein de la partition associée à l'utilisateur respectif,
- l'unité (101, 102) de commande contrôle si, le long des chemins déterminés, au sein de la partition associée à l'utilisateur respectif, pendant une durée d'utilisation planifiée respectivement, des ressources de système nécessaires sont disponibles,
- l'unité (101, 102) de commande réserve pour les demandes de service de communication respectivement, si le résultat d'un contrôle est positif, des ressources de système nécessaires et commande des fonctions de routage ou de commutation des troisièmes appareils de communication en correspondance avec les chemins déterminés.

2. Procédé suivant la revendication 1,
dans lequel l'unité de commande contrôle, lors de demandes de service de communication, respectivement à l'aide de directives de système, si des ressources de système pour l'utilisateur respectif sont limitées au sein de la partition qui lui est associée et/ou si l'utilisateur est autorisé par des demandes en temps réel à utiliser des flux de données et, si le résultat du contrôle est négatif, envoie une alerte.

3. Procédé suivant l'une des revendications 1 ou 2,
dans lequel
- les troisièmes appareils de communication comprennent chacun au moins une unité d'émission et de réception, et à chaque unité d'émission et de réception sont associés respectivement plusieurs files d'attente d'émission, auxquelles respectivement pendant une durée d'accès pouvant être définie dans un cycle de répétition pouvant être défini est accordé un accès à l'unité respective d'émission et de réception,
- l'unité (101, 102) de commande détermine par des demandes en temps réel pour chaque flux de données demandées de la part de l'utilisateur si peut être associée exclusivement à celui-ci, dans au moins un troisième appareil de communication le long du chemin déterminé, une fenêtre d'émission dans une file d'attente d'émission,
- l'unité (101, 102) de commande envoie, si le résultat de la détermination est négatif, au moins une alerte,
- l'unité (101, 102) de commande réserve avec des demandes en temps réel, si le résultat de la détermination est positif, des chemins déterminés de manière correspondante et des associations de ressources du système nécessaires aux files d'attente d'émission pour des flux de données.

4. Procédé suivant la revendication 3,
dans lequel on commande les durées d'accès et les cycles de répétition pour les files d'attente d'émission des troisièmes appareils de communication au moyen de time aware shaper, conformément à IEE 802.1Qbv.

5. Procédé suivant l'une des revendications 1 à 4,
dans lequel on associe les appareils de communication à un réseau Software Defined, qui comprend un plan (1) de commande de communication désigné par control plane et un plan (2) de transmission de données désigné par data plane, dans lequel l'unité (101, 102) de commande est associée au control plane et dans lequel les appareils (200) de communication sont associés au data plane.

6. Procédé suivant la revendication 5,
dans lequel on fixe les partitions au moyen d'un système d'ingénierie manuellement par un administrateur de système ou d'une manière automatisée.

7. Procédé suivant l'une des revendications 5 ou 6,
dans lequel les troisièmes appareils de communication comprennent des routeurs et/ou des commutateurs et dans lequel, par l'unité (101, 102) de commande, peuvent être prescrits des tableaux de flux, dont se déduisent des tableaux de routage, et/ou des tableaux d'avance pour des troisièmes appareils de communication associés à l'unité (101, 102) de commande.

8. Procédé suivant l'une des revendications 1 à 7,
dans lequel des services de communication demandés sont associés fixement à respectivement une partition.

9. Procédé suivant l'une des revendications 1 à 8,
dans lequel des paramètres de qualité de service comprennent une largeur de bande, une latence, une disponibilité et/ou une redondance.

10. Procédé suivant l'une des revendications 1 à 9,
dans lequel on spécifie des paramètres de qualité de service supplémentairement aux paires de nœuds finaux dans le cadre de demandes de service de communication de la part de l'utilisateur.

11. Procédé suivant la revendication 10,
dans lequel on égalise les demandes de service de communication de la part de l'utilisateur pour le contrôle des paramètres de qualité de service pouvant être garantis, qui ont été déterminés et qui sont représentés dans la matrice de paramètre de qualité de service de la partition respective.

12. Unité de commande pour effectuer un procédé suivant l'une des revendications 1 à 11, qui est conformée et conçue pour
- commander des fonctions de plusieurs appareils (200) de communication d'un réseau de communication, qui sont associés à l'unité de commande, le réseau de communication étant subdivisé en plusieurs partitions, qui comprennent chacune plusieurs nœuds finaux comme points d'accès de service et des proportions pouvant être prescrites de ressources de système d'appareil (200) de communication, qui sont associés à la partition respective,
- pour une transmission de données au sein d'une partition, recevoir des paramètres de qualité de service, qui peuvent être garantis et déterminés, par paire de nœud finaux et en fonction de la direction, et qui peuvent être représentés par partition dans une matrice de paramètre de qualité de service pluridimensionnelle,
- associer chaque partition, ensemble avec les paramètres de qualité de service pouvant être garantis, respectivement de manière univoque à un utilisateur, dans lequel des ressources de système disponibles potentiellement et/ou des autorisations pour l'utilisateur sont fixées par la partition associée respectivement,
- déterminer pour des demandes de service de communication de la part de l'utilisateur au sein d'une partition respectivement un chemin entre un premier appareil de communication à un premier nœud final et un deuxième appareil de communication à un deuxième nœud final, en passant par des troisièmes appareils de communication au sein de la partition associée à l'utilisateur respectif,
- pour contrôler si, le long des chemins déterminés au sein de la partition associée à l'utilisateur respectif pendant une durée d'utilisation planifiée, des ressources de système nécessaires sont respectivement disponibles,
- pour réserver, pour les demandes de service de communication, respectivement, si le résultat d'un contrôle est positif, des ressources de système nécessaires et pour commander des fonctions de routage et/ou de commutation des troisièmes appareils (200) de communication en correspondance avec les chemins déterminés.
